# EUROPÄISCHE PATENTSCHRIFT

(11) **EP 2 942 233 B1**
(45) Veröffentlichungstag und Bekanntmachung des Hinweises auf die Patenterteilung: **06.04.2022**
(21) Anmeldenummer: 15156832.6
(22) Anmeldetag: 27.02.2015
(51) Int. Cl.: B60Q 3/64, B60Q 3/74, B60Q 3/00, F21V 8/00

(54) **FLÄCHIGES BELEUCHTUNGSELEMENT FÜR DIE INNENAUSSTATTUNG EINES FAHRZEUGS**
FLAT LIGHTING ELEMENT FOR THE INTERIOR OF A VEHICLE
ÉLÉMENT D'ÉCLAIRAGE PLAT POUR L'ÉQUIPEMENT INTÉRIEUR D'UN VÉHICULE

(30) Priorität: 06.05.2014 DE 102014006490
(43) Veröffentlichungstag der Anmeldung: 11.11.2015
(73) Patentinhaber: Lisa Dräxlmaier GmbH, 84137 Vilsbiburg (DE)
(72) Erfinder: Bayersdorfer, Bernhard, 84171 Baierbach (DE)

(56) Entgegenhaltungen:
- DE-A1- 10 120 463
- FR-A1- 2 912 095
- GB-A- 2 492 398

## Beschreibung

### TECHNISCHES GEBIET

Die Erfindung betrifft ein flächiges Beleuchtungselement, das in der Innenausstattung eines Fahrzeugs verbaut werden kann. Solche Vorrichtungen werden insbesondere in Fahrzeugen im Automobilbereich, in der Luftfahrt, im schienengebundenen Transport und in der Schifffahrt benötigt.

### HINTERGRUND DER ERFINDUNG

Es ist zum Beispiel aus der DE102013008433 bekannt, flächige Lichtleiter mit einer optischen Lackschicht zu versehen und mit einer Dekorschicht aus Leder oder Textil zu kaschieren, die zumindest teilweise transparent ist. Damit kann der Innenraum eines Fahrzeugs ausgeleuchtet werden. Die Herstellung eines solchen Beleuchtungselements erfordert jedoch mehrere Arbeitsgänge, um die benötigten Schichten miteinander zu verkleben.

Aus dem Opel Adam ist ein flächig hinterleuchteter Zierstab bekannt. Hinter einer bedruckten Folie ist ein zur folienabgewandten Seite lichtdichter Kasten mit Lichtquellen angebracht, der an der Instrumententafel befestigt werden kann. Die Lichtquellen sind einige cm von der Folie entfernt und hinterstrahlen die Folie. Die DE 10 2011 016 420 A1, die DE 10 2010 052 380 A1 und die DE 698 28 746 T2 zeigen zudem Lichtleiter mit angekoppelten Lichtquellen und angrenzenden Schichten, wobei die angrenzenden Schichten das Lichtausbreitungsverhalten des Lichtleiters beeinflussen.

Die DE 101 20 463 A1 zeigt ein Verbindungsverfahren zum Verbinden einer Folie mit einem spritzgegossenen Kunststoffmaterial, die zusammen eine hinterleuchtete Beleuchtungseinrichtung bilden.

Die GB 249398 A zeigt ein Herstellverfahren für eine zusammengesetzte Beleuchtungseinrichtung, beispielsweise als Streuscheibe für ein Hintergrundlicht für LCD Bildschirme. Die Fläche zwischen den Schichten der Streuscheibe ist dabei nicht plan, sondern linsenförmig, um Lichtstrahlen zu bündeln.

Die FR 2912095 A1 zeigt eine mehrschichtige Beleuchtungseinrichtung, bei der ein Lichtleiter mit seitlich eingekoppeltem Licht mit dünnen Schichten bedeckt ist, die über ihren Brechindex die Lichtausbreitung im Lichtleiter befördern.

Gemäß der WO 2011/029207 A1 ist ein flächiges Dekorelement mit Durchgangslöchern vorgesehen und zumindest im Bereich von Durchgangslöcher ist auf der Rückseite des flächigen Dekorelements eine Folie aufgebracht. Beim Anspritzen einer Kunststoffschmelze drückt der Druck der Kunststoffschmelze die Folie in diese Durchgangslöcher.

### BESCHREIBUNG DER ERFINDUNG

Es ist eine Aufgabe der Erfindung, ein Beleuchtungselement für ein Fahrzeug anzugeben, das eine größere Fläche beleuchten kann, mit reduzierten Kosten herstellbar und leichter montierbar ist.

Die Aufgabe wird mit einem Beleuchtungselement mit den Merkmalen von Anspruch 1 und einem Verfahren mit den Merkmalen des Anspruchs 12 gelöst. Vorteilhafte Ausgestaltungen der Erfindung sind in den weiteren Patentansprüchen aufgeführt.

Das erfindungsgemäße Beleuchtungselement enthält eine Lichtquelle, einen flächigen Lichtleiter und eine zumindest teilweise transparente Folie. Die Lichtquelle hinterleuchtet nicht den Lichtleiter, sondern koppelt in einem spitzen Winkel Licht in den Lichtleiter ein. Der Winkel ist dabei bevorzugt 0 bis 45°, um die Reflexionen an den Oberflächen des Lichtleiters zu maximieren, so dass dieser das Licht tatsächlich leitet. Lichtleiter und Folie bestehen aus unterschiedlichen Materialien. Der Lichtleiterist oberflächenbehandelt, um eine gleichmäßige und gerichtete Auskopplung des Lichtes aus dem Lichtleiter in die Folie zu gewährleisten. Der Lichtleiter wird durch Hinterspritzen der Folie hergestellt, d.h. die Folie wird in ein Spritzgußwerkzeug eingelegt und der Lichtleiter in einem Verfahrensschritt gespritzt und mit der Folie verbunden. Indem die Hinterspritzung der Folie als Lichtleiter benutzt wird, kann die Anzahl der benötigten Einzelteile reduziert werden.

Folie und Lichtleiter gehen dadurch eine feste Verbindung ein, so dass zwischen beiden keine Reibung und damit Knarzgeräusche entstehen können. Durch das Hinterspritzen verringert sich auch die Anzahl notwendiger Verfahrensschritte bei der Herstellung des Beleuchtungselements.

Vorteilhafterweise hat das Material der Folie eine geringere optische Brechzahl als das Material des Lichtleiters. Damit ist die Bedingung für Totalreflexion erfüllt. Zwischen beiden existiert keine Trennschicht, so dass die optischen Eigenschaften beider Schichten und ihr Verhältnis zueinander die Lichtbrechung und -reflektion beeinflussen. Je größer der Unterschied der Brechzahlen, umso stumpfer kann der Lichteinfallswinkel auf die Trennfläche sein, ohne dass ein Lichtstrahl den Lichtleiter verlässt.

Der Lichtleiter kann beispielsweise aus Polycarbonat (PC), Brechzahl ca. n=1,58, und der Folie aus Polymethylmethacrylat (PMMA), Brechzahl ca. n=1,49, bestehen. Diese Materialien lassen sich gut verarbeiten und garantieren einen ausreichenden Brechzahlunterschied.

Nach einer vorteilhaften Weiterbildung der Erfindung hat die Folie eine Dicke von 0,1 bis 1,5 mm, bevorzugt 0,2-0,3 mm und der Lichtleiter eine Dicke von 1 bis 5 mm, bevorzugt 2,5-3 mm. Eine sehr dünne Folie mit einer Dicke von 0,2-0,3 mm ist leicht formbar, bei einer etwas dickeren Folie können durch Bearbeiten beider Oberflächen zusätzliche Effekte eingearbeitet werden. Bei der Dicke des Lichtleiters sprechen für eine größere Dicke die bessere Steifigkeit und geringere Verluste beim Einkoppeln von Licht, dies ist bei 2,5-3 mm Dicke möglich. Dünne Lichtleiter müssen zusätzlich versteift werden.

Vorteilhafterweise ist die Folie bedruckt. Mit aus dem Foliendruck bekannten Verfahren kann eine ansprechende Oberflächengestaltung erreicht, aber auch die Lichtwirkung zum Fahrgastraum geprägt werden. Hat zum Beispiel die Bedruckung in Nähe zur Lichteinkopplung eine höhere Dichte als in einer größeren Entfernung zur Lichteinkopplung, dann wird eine homogene Lichtverteilung über das Beleuchtungselement unterstützt. Eine höhere Druckdichte in Nähe der Lichteinkopplung, hervorgerufen durch mehr, dunklere oder größere Druckpunkte, führt zu einer größeren Abschattung, so dass in Gebieten mit höherer Lichtstärke im Lichtleiter ähnlich viel Licht die Folie verlässt, wie in Gebieten mit geringerer Lichtstärke.

Um die Verluste gering zu halten, erfolgt das Einkoppeln des Lichts durch Aufsetzen der Lichtquelle auf den Lichtleiter, beispielsweise durch verclipsen einer Haltestruktur der Lichtquelle mit einem Einkoppelstutzen des Lichtleiters. Es hat sich als günstig erwiesen, dass nicht nur eine einzige Lichtquelle benutzt wird, sondern dass mehrere Lichtquellen an Außenrändern des Lichtleiters angeordnet sind und Licht in den Lichtleiter einkoppeln. Damit wird pro Lichtquelle eine geringere Leistung benötigt und eine homogene Ausleuchtung auch großer Strukturen im Fahrzeuginnenraum unterstützt.

Nach einer vorteilhaften Weiterbildung der Erfindung ist die Folie in eine dreidimensionale Form tiefgezogen und die dadurch die dem Innenraum des Fahrzeug zugewandte Seite des Beleuchtungselements bildet. Damit erhöhen sich die ästhetischen Gestaltungsmöglichkeiten und die Anzahl der Einsatzmöglichkeiten des Beleuchtungselements.

Um das Beleuchtungselement einfach in weitere Innenausstattungselemente eines Fahrzeugs montieren zu können, weist der Lichtleiter Versteifungsrippen und Haltelemente auf. Diese befinden sich vorzugsweise an einer dem Innenraum des Fahrzeugs abgewandten Seite des Beleuchtungselements und können darüber mit dem Fahrzeug befestigt werden.

Für eine gute Verbindung des Lichtleiters mit der Folie erfolgt das Hinterspritzen des Lichtleiters bei Temperaturen von 200-300 °C, bevorzugt 240-250°C, und einer auf mindestens 80°C vorgewärmten Folie. Ein Vorwärmen der Folie über ein Werkzeug, in das die Folie eingelegt ist, verringert die Taktzeit beim Hinterspritzen. Bei den angegebenen Temperaturen wird das Material des Lichtleiters gut aufgeschmolzen und kann sich fest mit der Folie verbinden. Wobei eine zu große Erhitzung wiederum nicht wünschenswert ist, da dies die Abkühlzeit unnötig verlängern würde und eventuell die Folie beschädigen könnte.

Bevorzugte Ausführungsformen der Erfindung sehen vor, dass die Folie auf einer Seite mehrfach bedruckt und/oder auf beiden Seiten bedruckt ist. Damit kann ein mehrfarbiger Druck und eine Tiefenstruktur beim Betrachten der Folie erreicht werden, letztes insbesondere, wenn die Folie eine Dicke von größer 0,5 mm, beispielsweise 1 mm hat.

Auf der dem Lichtleiter zugewandten Seite der Folie ist bei einer Bedruckung eine Oberflächenstruktur zur Homogenisierung oder Akzentuierung der Lichtabstrahlung einbringbar. Die Struktur zur Lichtauskopplung ist vorzugsweise fest an dem Lichtleiter angebracht. Die Oberflächenstruktur besteht dabei vorteilhafterweise aus einer Vielzahl von punktförmigen Farbflecken oder Streupartikeln. An den bedruckten Stellen ist nicht das Material der Folie, sondern die Farbe in Kontakt mit dem Lichtleiter, so dass sich dort andere Brechungsverhältnisse ergeben. Insoweit kann damit die Bedruckung die Lichtauskopplung homogenisieren oder akzentuieren.

Eine kostengünstige Lichteinkopplung in den Lichtleiter erfolgt mittels Licht-Emittierende Dioden (LED) oder Laserdioden, vorzugsweise RGB-LEDs, die damit auch Farbeffekte ermöglichen.

Ein erfindungsgemäßes Verfahren zur Herstellung eines erfindungsgemäßen Beleuchtungselements besteht zumindest aus den Schritten Bedrucken einer planaren Folie, Verformen der Folie in eine vorgegebene dreidimensionale Form, Zuschneiden der Folie nach den Maßen eines Innenausstattungsteils, Hinterspritzen der Folie mit einem transparenten Material zur Formung eines Lichtleiters und Befestigen zumindest einer Lichtquelle am Lichtleiter. Das Bedrucken einer planaren Folie vor einem späteren Prägen vereinfacht diesen Schritt deutlich, zudem kann das Verformen gleichzeitig mit dem Hinterspritzen in einem Werkzeug erfolgen. Die Folie kann vor dem Verformen zugeschnitten sein oder wird erst nach oder mit dem Verformen von möglichen Überlängen befreit. Durch eine frühzeitige Verbindung von Lichtquelle mit Lichtleiter werden spätere zusätzliche Montageschritte beim Einbau des Beleuchtungselements ins Fahrzeug vermieden.

Vorteilhafterweise erfolgt das Verformen der Folie mittels Tiefziehen. Beim Tiefziehen von Kunststoff verändert sich die Dicke der Folie nicht, das Material rutscht nach. Das Tiefziehen kann dabei im gleichen Werkzeug wie das Hinterspritzen des Lichtleiters erfolgen, oder in einem separaten Werkzeug vorab erfolgen. Das Tiefziehwerkzeug ist starr, die Presskraft zur Umformung wird mit einem Stempel aufgebracht. Der Stempel weist dabei keine scharfen Kanten auf, die ansonsten zu einem Einreißen der Folie führen würden.

Eine Vorbehandlung der Folie, beispielsweise durch Bedrucken der Folie erfolgt vorteilhafterweise vor der Verformung. Dabei hat nach einer Ausgestaltung der Erfindung die Bedruckung in der Nähe zur Lichteinkopplung eine höhere Dichte als in einer größeren Entfernung zur Lichteinkopplung.

Die Vorrichtung kommt bevorzugt in Fahrzeugtüren, Cockpits oder Mittelkonsolen zum Einsatz, an denen die optischen Effekte ohne Beeinträchtigung der Straßensicht durch den Fahrer gut wahrnehmbar sein sollen.

Darüber hinaus sind weitere Vorteile und Merkmale der vorliegenden Erfindung aus der Beschreibung bevorzugter Ausführungsformen ersichtlich. Die dort beschriebenen Merkmale können alleinstehend oder in Kombination mit einem oder mehreren der oben erwähnten Merkmale umgesetzt werden. Die folgende Beschreibung der bevorzugten Ausführungsformen erfolgt dabei unter Bezugnahme auf die begleitenden Zeichnungen.

### KURZE BESCHREIBUNG DER FIGUREN

Figur 1 zeigt schematisch eine Draufsicht eines flächigen Lichtleiters mit Oberflächenstruktur und Einkoppelstellen.
Figur 2 zeigt schematisch einen Schnitt durch ein Beleuchtungselement mit Lichtleiter und Folie.
Figur 3 zeigt eine Vergrößerung des Schichtenaufbaus.
Figuren 4 bis 6 zeigen schematisch unterschiedliche Einkopplungsvarianten der Lichtquelle in den Lichtleiter.
Figur 7 zeigt ein Verfahren zur Herstellung des Beleuchtungselements.

### AUSFÜHRUNGSBEISPIEL

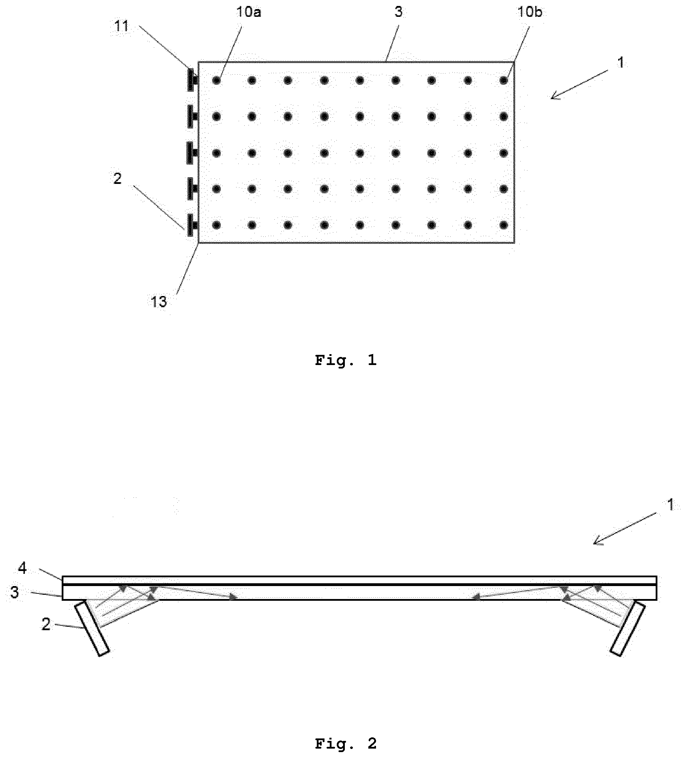

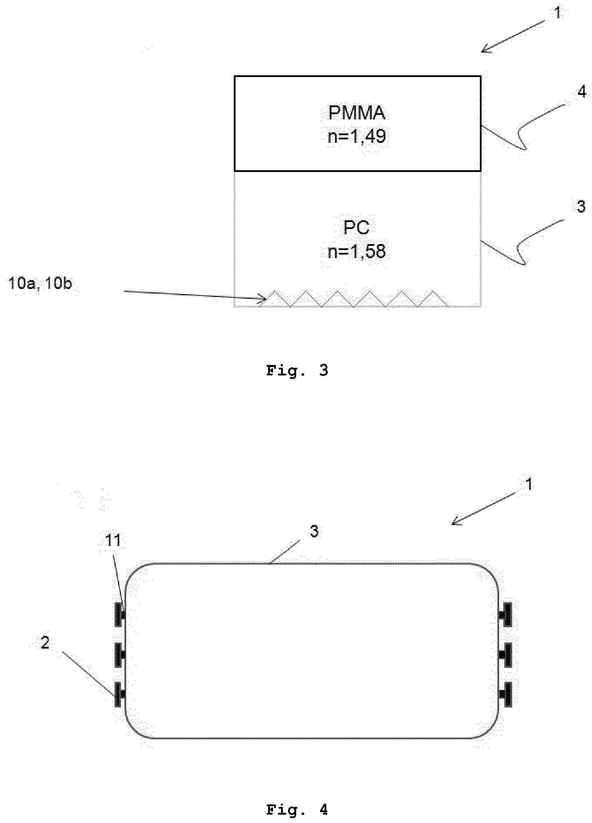

Figur 1 zeigt schematisch einen flächigen Lichtleiter 3 als Teil eines Beleuchtungselements 1 für die großflächige Hinterleuchtung eines Türmittelfeldes. Zum Einkoppeln von Licht sind an einer Kante 13 fünf RGB Licht-Emittierenden Dioden (Leuchtdioden, LED) 2 als Lichtquelle vorgesehen, die auf Einkoppelstellen 11 des Lichtleiters 3 aufgesetzt sind und in der Farbe veränderbares Licht einkoppeln. Die konkrete Anzahl von LEDs 2 und Einkoppelstellen 11 hängt von der Breite und Länge des Lichtleiters 3, der gewünschten maximalen Leuchtstärke und der Leuchtstärke der einzelnen LED 2 ab und kann entsprechend dimensioniert werden, weitere Varianten sind in den Figuren 4 bis 6 angegeben.

Der Lichtleiter 3 ist oberflächenbehandelt, um eine gleichmäßige und gerichtete Auskoppelung des Lichtes aus dem Lichtleiter 3 in die Folie 4 zu gewährleisten. In Richtung der Auskoppelung des Lichtes weist die Oberfläche Einkerbungen 10 auf, die als Muster von der Einkopplungsstelle an der Kante 13 zum Beginn des Lichtleiters 3 bis hin zum Abschluss des Lichtleiters 3 angeordnet sind. Dabei hat in dieser Aufreihung die erste Einkerbung 10a einen kleineren Durchmesser als die letzte Einkerbung 10b. Es sind hier jedoch auch andere Mittel einsetzbar, den relativen Anteil des ausgekoppelten Lichtes am Gesamtlicht, das die Auskoppelstelle passiert, so einzustellen, dass der Anteil zu Beginn des Lichtleiters 3 klein und zum Ende des Lichtleiters 3 groß ist, dazu können Linien, Streupartikel oder Auswölbungen in den Lichtleiter 3 eingebracht sein, die sich auf der der Sichtseite abgewandten Seite befinden, siehe auch Figur 3 unten.

Figur 2 zeigt schematisch den Querschnitt der Beleuchtungseinrichtung 1 mit einer Folie 4, dem Lichtleiter 3, der in Randbereichen zwei Einkoppelstellen 11 aufweist, in die jeweils Licht über LEDs oder Laserdioden 2 eingekoppelt wird. Die LEDs 2 stehen im spitzen Winkel, ca. 30°, zur Achse des Lichtleiters 3, so dass einfallende Lichtstrahlen im Wesentlichen an der Oberfläche des Lichtleiters 3 sowohl auf Sichtseite, als auch auf der entgegengesetzten Seite reflektiert werden. Damit kann der gesamte Lichtleiter 2 trotz der Randlage der Lichtquellen 2 ausgeleuchtet werden.

Die Auskopplung des Lichts aus dem Lichtleiter 3 ist in Figur 3 verdeutlicht. An der Unterseite des Lichtleiters 3, der aus Polycarbonat PC mit einer optischen Brechzahl von n=1,58 besteht ist eine Oberflächenstruktur 10a, 10b aufgebracht, die dazu führt, dass Lichtstrahlen mit relativ großem Winkel auf die gegenüberliegende Sichtseite treffen und dort nicht mehr reflektiert, sondern in die Folie 4 hineingebrochen werden. Damit verlassen diese Lichtstrahlen den Lichtleiter 3, durchdringen die Folie 4 und sind auf der Sichtseite des Beleuchtungselements sichtbar. Die Folie besteht aus Polymethylmethacrylat PMMA mit einer Brechzahl von 1,49. Bei der Auswahl der Materialien ist darauf zu achten, dass die Brechzahl unterschiedlich ist und sich ausreichend unterscheidet. Damit wird ein Großteil der im spitzen Winkel auf die Trennfläche zwischen PC und PMMA treffenden Lichtstrahlen reflektiert und verbleibt im Lichtleiter 3.

In Figur 4 ist ein Lichtleiter 3 eines Beleuchtungselements 1 gezeigt, in den von zwei Seiten über jeweils drei LEDs 2 und Einkoppelstellen 11 Licht eingekoppelt wird. Die Einkoppelstellen 11 sind am Rand des Lichtleiters 3, d.h. direkt auf einer Kante, nahe einer scharfen Biegung oder sonstigen Diskontinuität mit spitzen Winkel zwischen 0 und 45° auf den Lichtleiter aufgesetzt, wobei die LEDs 2 mit der Einkoppelstelle 11 verclipst werden.

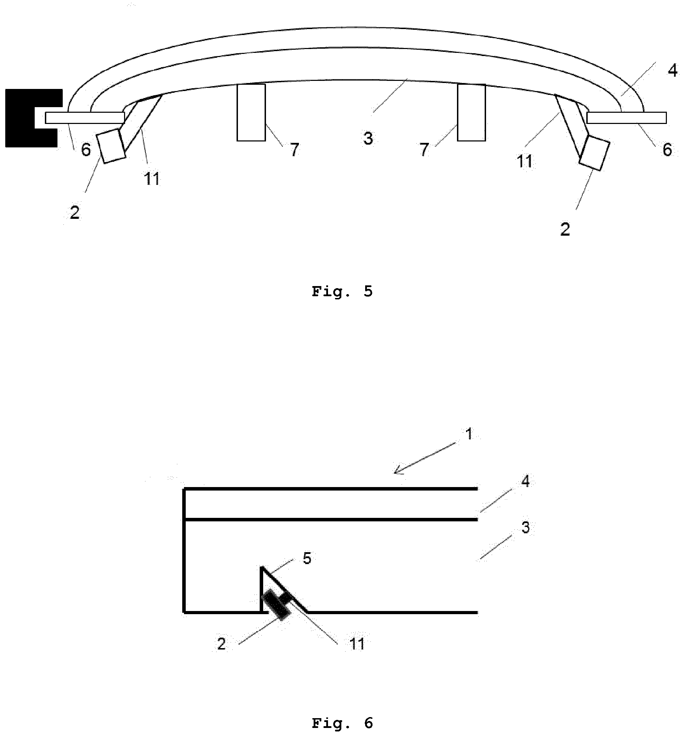

Figur 5 zeigt eine Variante des erfindungsgemäßen Beleuchtungselements 1, bei dem die Folie 4 sichtbar tiefgezogen und der Lichtleiter 4, hergestellt durch Hinterspritzen, der dreidimensionalen Form der Folie folgt und mit dieser fest verbunden bleibt. Damit ist eine große Vielfalt an Innenausstattungsteilen formbar. Der obere Figurrand bildet die Sichtseite, an der die Folie 4 angeordnet ist. Der untere Figurrand ist vom Fahrzeuginnenraum nicht sichtbar, dort ist das Beleuchtungselement mit weiteren Innenausstattungsteilen befestigt.

Beim Hinterspritzen der Folie 4 und Herstellen des Lichtleiters 3 werden innerhalb eines Arbeitsganges und in einem Werkzeug auch weitere Strukturen in den Lichtleiter 3 eingebracht, neben der Oberflächenstruktur, siehe Figur 3, sind dies Befestigungselemente 6 und Versteifungen 7 in Form von Rippen. Durch die Befestigungselemente 6 kann der Lichtleiter 3 und damit das gesamte Beleuchtungselement 1 an umliegenden Innenausstattungselementen befestigt werden. Durch die Rippen erlangt der Lichtleiter 3 zusätzliche Steifigkeit und kann damit tragend wirken und trotzdem dünn, leicht und mit geringem Materialeinsatz hergestellt werden.

Die Folie 4 ist wesentlich dünner als der Lichtleiter 3. Die durchschnittliche Foliendicke ist 0,3 mm, währenddessen der Lichtleiter 3 etwa 3 mm stark ist. Durch die Versteifungen hat der Lichtleiter 3 jedoch eine wesentlich unregelmäßigere Dicke. Vor allem an den Einkopplungsstellen sollte eine Mindestdicke für eine verlustarme Lichteinkopplung gegeben sein. Die Folie ist bedruckt, wobei damit nicht die optischen Eigenschaften bezüglich der Lichtauskopplung beeinträchtigt werden. Vielmehr führen die Farbpigmente zu einer Abschattung, so dass Muster auf der Oberfläche der Folie 4 bei Hinterleuchtung durch den Lichtleiter 3 besser erkennbar sind. Es können durch die Bedruckung auch Inhomogenitäten bei der Lichtausbreitung ausgeglichen werden. So ist die Druckdichte, d.h. Anzahl, Form, Farbstärke, in Bereichen hoher Lichtintensität, typischerweise nahe der Lichteinkopplung oder bei Diskontinuitäten des Lichtleiters 3 (Biegungen, Kanten), höher als weiter von diesen Bereichen entfernt. Das Bedrucken der Folie 4 eröffnet weitere gestalterische Möglichkeiten. So können bei farbigem Bedrucken auch bei weißem Licht farbige Symbole oder Schriften dargestellt werden. Bei mehreren Farbschichten oder beidseitigem Bedrucken der Folie 4 sind auch Tiefenwirkungen darstellbar.

Eine weitere Einkopplungsvariante ist in Figur 6 gezeigt. In einem Randbereich des Lichtleiters 3 ist eine Vertiefung 5 eingebracht, in der die Einkoppelstelle 11 und die LED 2 angeordnet sind. Auch hierbei wird das Licht im spitzen Winkel in den Lichtleiter 3 eingekoppelt.

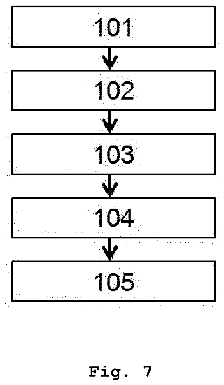

Figur 7 zeigt ein Verfahren zur Herstellung des Beleuchtungselements. In einem ersten Schritt 101 wird eine planare Folie bedruckt, die in einem zweiten Schritt 103 mittels Tiefziehen verformt wird und damit die für den späteren Verbau gewünschte dreidimensionale Form erhält. Anschließend wird die Folie in einem dritten Schritt 103 nach den Maßen eines Innenausstattungsteils zugeschnitten. Diese tiefgezogene Folie wird in einem vierten Schritt 104 mit einem transparenten Material, PC, hinterspritzt und damit der Lichtleiter geformt, der dabei vorgegeben durch das Spritzgußwerkzeug die gewünschte Form, inklusive der benötigten Rippen und Befestigungselemente erhält. In einem fünften Schritt 105, der auch erst bei der Montage des Beleuchtungselements im Fahrzeug erfolgen kann, wird zumindest eine Lichtquelle am Lichtleiter in einem spitzen Winkel von 0 bis 45° mittels Clipsen befestigt.

Die Temperaturen beim Hinterspritzen sind an die Materialien des Lichtleiters und der Folie angepasst. So wird das PC auf Temperaturen von 200-300 °C, bevorzugt 250-300°C, erwärmt und in das Spritzgußwerkzeug eingespritzt. Das Werkzeug wird anschließend nicht unter 80°C abgekühlt und wird auf Temperaturen zwischen 100 und 120° gehalten, so dass die Folie nach dem Einlegen in das Werkzeug vorgewärmt wird und die Taktzeiten entsprechen kurz gehalten werden.

Alternativ kann das Verformen der Folie auch im Wesentlichen gleichzeitig im gleichen Werkzeug wie das Spritzgiessen erfolgen. Dann wird die bedruckte planare Folie mit einem Haftsystem versehen und in das Werkzeug eingelegt. Nach Schließen des Werkzeugs folgt ein Prägeprozess, wobei durch das eingespritze Material des Lichtleiters, die Folie in einen Hohlraum des Werkzeugs gepresst wird und die gewünschte, durch das Werkzeug vorgegebene Form annimmt. Das Material des Lichtleiters füllt den Hohlraum aus und verbindet sich fest mit der Folie auf der Sichtseite des Lichtleiters. Bevorzugt auf der entgegengesetzten Seite sind Versteifungen und Befestigungselemente durch das Spritzgießen im Lichtleiter selbst entstanden. Nach Öffnen des Werkzeuges werden die Folie und der Lichtleiter, nunmehr fest verbunden, entnommen.

Das Zuschneiden der Folie kann sowohl vor dem Umformen, beim Umformen selbst oder nach Entnehmen des Befestigungselements aus dem Werkzeug erfolgen.

## Patentansprüche

1. Flächiges Beleuchtungselement (1) für ein Fahrzeug, mit einer Lichtquelle (2), einem flächigen Lichtleiter (3), mit einer Dicke von 1 bis 5 mm, bevorzugt 2,5 bis 3 mm, einer zumindest teilweise transparenten Folie (4) mit einer Dicke von 0,1 bis 1,5 mm, bevorzugt 0,2 bis 0,3 mm, der Lichtleiter (3) und die Folie (4) aus unterschiedlichen Materialien bestehen, wobei das Material der Folie (4) eine geringere optische Brechzahl als das Material des Lichtleiters (3) aufweist, **dadurch gekennzeichnet, dass** der Lichtleiter (3) oberflächenbehandelt ist, um eine gleichmäßige und gerichtete Auskopplung des Lichtes aus dem Lichtleiter (3) in die Folie (4) zu gewährleisten und der Lichtleiter (3) durch Hinterspritzen der Folie (4) hergestellt und mit der Folie (4) flächig direkt verbunden ist, und die Lichtquelle (2) nicht dazu ausgebildet ist, den Lichtleiter (3) zu hinterleuchten, sondern in einem spitzen Winkel bezüglich der durch die Verbindungsfläche zwischen dem Lichtleiter (3) und hinterspritzter Folie (4) im Querschnitt definierten Achse Licht an der von der hinterspritzten Folie (4) abgewandten Seite des Lichtleiters (3) durch Aufsetzen der Lichtquelle (2) auf den Lichtleiter (3) einzukoppeln, und beim Hinterspritzen der hinterspritzten Folie (4) gleichzeitig rippenförmige Befestigungselemente (6, 7) des Lichtleiters (3) zur Befestigung des Beleuchtungselements (1) an Innenausstattungselementen des Fahrzeugs des Lichtleiters (3) ausgebildet werden.

2. Beleuchtungselement (1) nach Anspruch 1, **dadurch gekennzeichnet, dass** die Differenz der optischen Brechzahlen der hinterspritzten Folie (4) und des Lichtleiters (3) mindestens 0,09 beträgt.

3. Beleuchtungselement (1) nach Anspruch 2, **dadurch gekennzeichnet, dass** der Lichtleiter (3) aus Polycarbonat und die hinterspritzte Folie (4) aus Polymethylmethacrylat besteht.

4. Beleuchtungselement (1) nach Anspruch 1, **dadurch gekennzeichnet, dass** die hinterspritzte Folie (4) bedruckt ist.

5. Beleuchtungselement (1) nach Anspruch 4, **dadurch gekennzeichnet, dass** die Bedruckung in der Nähe zur Lichteinkopplung eine höhere Dichte hat als in einer größeren Entfernung zur Lichteinkopplung.

6. Beleuchtungselement (1) nach einem der vorherigen Ansprüche, **dadurch gekennzeichnet, dass** mehrere Lichtquellen (2) an Außenrändern des Lichtleiters (3) angeordnet sind und Licht in den Lichtleiter (3) einkoppeln.

7. Beleuchtungselement (1) nach einem der vorherigen Ansprüche, **dadurch gekennzeichnet, dass** die hinterspritzte Folie (4) in eine dreidimensionale Form tiefgezogen ist und damit die einem Innenraum des Fahrzeug zugewandte Seite des Beleuchtungselements (1) bildet.

8. Beleuchtungselement (1) nach einem der vorherigen Ansprüche, **dadurch gekennzeichnet, dass** der Lichtleiter (3) Versteifungsrippen aufweist und an einer dem Innenraum des Fahrzeugs abgewandten Seite des Beleuchtungselements (1) an dem Fahrzeug befestigt ist.

9. Beleuchtungselement (1) nach einem der vorherigen Ansprüche, **dadurch gekennzeichnet, dass** Lichtquelle (2) und Lichtleiter (3) miteinander verclipst sind.

10. Beleuchtungselement (1) nach Anspruch 4, **dadurch gekennzeichnet, dass** die Folie (4) auf einer Seite mehrfach bedruckt ist.

11. Beleuchtungselement (1) nach einem vorherigen Ansprüche, **dadurch gekennzeichnet, dass** eine Lichteinkopplung in den Lichtleiter mittels LED (12) erfolgt.

12. Verfahren zur Herstellung eines Beleuchtungselements (1), mit den Schritten:
Bedrucken (101) einer planaren Folie (4), mit einer Dicke von 0,1 bis 1,5 mm, bevorzugt 0,2 bis 0,3 mm, Verformen (102) der Folie (4) in eine vorgegebene dreidimensionale Form,
Zuschneiden (103) der Folie (4) nach den Maßen eines Innenausstattungsteils,
Hinterspritzen (104) der Folie (4) mit einem transparenten Material zur Formung eines Lichtleiters (3), mit einer Dicke von 1 bis 5 mm, bevorzugt 2,5 bis 3 mm, und flächiges Verbinden von Folie (4) und Lichtleiter (3),
• wobei beim Hinterspritzen rippenförmige Befestigungselemente (6) des Lichtleiters (3) zur Befestigung des Beleuchtungselements (1) an Innenausstattungselementen des Fahrzeugs hergestellt werden, und
• wobei das Material der hinterspritzten Folie (4) eine geringere optische Brechzahl als das Material des Lichtleiters (3) aufweist,
Befestigen (105) zumindest einer Lichtquelle (2) am Lichtleiter (3) derart, dass die Lichtquelle (2) den Lichtleiter (3) nicht hinterleuchtet, sondern in einem spitzen Winkel bezüglich der durch die Verbindungsfläche zwischen dem Lichtleiter (3) und hinterspritzter Folie (4) im Querschnitt definierten Achse Licht an der von der hinterspritzten Folie (4) abgewandten Seite des Lichtleiters (3) einkoppelt.

13. Verfahren nach Anspruch 12, **dadurch gekennzeichnet, dass** das Befestigen (105) der zumindest einen Lichtquelle (2) am Lichtleiter (3) in einem Winkel von 0 bis 45° bezüglich der Achse des Lichtleiters (3) mittels Clipsen des rippenförmigen Befestigungselements (6) erfolgt.

14. Verfahren nach Anspruch 12 oder 13, **dadurch gekennzeichnet, dass** das Hinterspritzen (104) des Lichtleiters (3) bei Temperaturen von 200-300 °C, bevorzugt 250-300°C, und einer auf mindestens 80°C vorgewärmten Folie (4) erfolgt.

15. Verfahren nach einem der Ansprüche 12 bis 14, **dadurch gekennzeichnet, dass** das Verformen (102) der hinterspritzten Folie (4) mittels Tiefziehen erfolgt.

16. Verfahren nach einem der Ansprüche 12 bis 15, **dadurch gekennzeichnet, dass** beim Bedrucken (101) der hinterspritzten Folie (4) vor der Verformung (102) die Bedruckung in der Nähe zur Lichteinkopplung eine höhere Dichte hat als in einer größeren Entfernung zur Lichteinkopplung.

## Claims

1. Two-dimensional illumination element (1) for a vehicle, having a light source (2), a two-dimensional light guide (3) having a thickness of 1 to 5 mm, preferably 2.5 to 3 mm, an at least partially transparent film (4) having a thickness of 0.1 to 1.5 mm, preferably 0.2 to 0.3 mm, with the light guide (3) and the film (4) consisting of different materials, wherein the material of the film (4) has a lower optical refractive index than the material of the light guide (3), **characterized in that** the light guide (3) has been surface-treated in order to ensure a uniform and directed coupling-out of the light from the light guide (3) into the film (4) and the light guide (3) is produced by back-injection of the film (4) and is directly connected to the surface of the film (4), and the light source (2) is not designed to backlight the light guide (3) but to couple in light on the side of the light guide (3) facing away from the back-injected film (4) at an acute angle with respect to the axis defined by the connection surface between the light guide (3) and the back-injected film (4) in cross section by placing the light source (2) onto the light guide (3), and, during back-injection of the back-injected film (4), at the same time rib-shaped attachment elements (6, 7) of the light guide (3) are formed for attachment of the illumination element (1) to interior design elements of the vehicle of the light guide (3).

2. Illumination element (1) according to Claim 1, **characterized in that** the difference between the optical refractive indices of the back-injected film (4) and of the light guide (3) is at least 0.09.

3. Illumination element (1) according to Claim 2, **characterized in that** the light guide (3) consists of polycarbonate and the back-injected film (4) consists of polymethyl methacrylate.

4. Illumination element (1) according to Claim 1, **characterized in that** the back-injected film (4) is printed.

5. Illumination element (1) according to Claim 4, **characterized in that** the print has a greater density near the coupling-in site of the light than at a greater distance from the coupling-in site of the light.

6. Illumination element (1) according to one of the preceding claims, **characterized in that** a plurality of light sources (2) are disposed at the outer peripheries of the light guide (3) and couple light into the light guide (3).

7. Illumination element (1) according to one of the preceding claims, **characterized in that** the back-injected film (4) is deep-drawn into a three-dimensional shape and thus forms the side of the illumination element (1) facing an interior of the vehicle.

8. Illumination element (1) according to one of the preceding claims, **characterized in that** the light guide (3) has stiffening ribs and is attached to the vehicle on a side of the illumination element (1) facing away from the interior of the vehicle.

9. Illumination element (1) according to one of the preceding claims, **characterized in that** the light source (2) and the light guide (3) are clipped together.

10. Illumination element (1) according to Claim 4, **characterized in that** the film (4) is printed multiple times on one side.

11. Illumination element (1) according to one of the preceding claims, **characterized in that** light is coupled into the light guide by means of LED (12).

12. Method for producing an illumination element (1), having the steps of:
printing (101) a planar film (4), having a thickness of 0.1 to 1.5 mm, preferably 0.2 to 0.3 mm,
deforming (102) the film (4) into a specified three-dimensional shape,
cutting (103) the film (4) according to the dimensions of an interior design part,
back-injecting (104) the film (4) with a transparent material for shaping a light guide (3), having a thickness of 1 to 5 mm, preferably 2.5 to 3 mm, and
connecting the surfaces of the film (4) and the light guide (3),
• wherein, during the back-injection, rib-shaped attachment elements (6) of the light guide (3) are produced for attaching the illumination element (1) to interior design elements of the vehicle, and
• wherein the material of the back-injected film (4) has a lower optical refractive index than the material of the light guide (3),
attaching (105) at least one light source (2) to the light guide (3) in a manner such that the light source (2) does not backlight the light guide (3) but couples in light on the side of the light guide (3) facing away from the back-injected film (4) at an acute angle with respect to the axis that is defined by the connection surface between the light guide (3) and the back-injected film (4) in cross section.

13. Method according to Claim 12, **characterized in that** the attachment (105) of the at least one light source (2) to the light guide (3) is effected at an angle from 0 to 45° with respect to the axis of the light guide (3) by clipping the rib-shaped attachment element (6).

14. Method according to Claim 12 or 13, **characterized in that** the back-injection (104) of the light guide (3) is carried out at temperatures from 200-300°C, preferably 250-300°C, and with a film (4) preheated to at least 80°C.

15. Method according to one of Claims 12 to 14, **characterized in that** the deforming (102) of the back-injected film (4) is effected by means of deep-drawing.

16. Method according to one of Claims 12 to 15, **characterized in that**, during the printing (101) of the back-injected film (4) and before the deforming (102), the printing has a greater density near the coupling-in site of the light than at a greater distance from the coupling-in site of the light.

## Revendications

1. Élément d'éclairage (1) plat pour un véhicule, comprenant une source de lumière (2), un conducteur optique (3) plat, ayant une épaisseur de 1 à 5 mm, de préférence de 2,5 à 3 mm, un film (4) au moins partiellement transparent ayant une épaisseur de 0,1 à 1,5 mm, de préférence de 0,2 à 0,3 mm, le conducteur optique (3) et le film (4) étant constitués de matériaux différents, le matériau du film (4) présentant un indice de réfraction optique plus faible que celui du matériau du conducteur optique (3), **caractérisé en ce que** le conducteur optique (3) est traité en surface afin de garantir un découplage régulier et dirigé de la lumière hors du conducteur optique (3) dans le film (4) et le conducteur optique (3) est produit par projection par l'arrière sur le film (4) et est relié directement à plat au film (4), et la source de lumière (2) n'est pas configurée pour rétroéclairer le conducteur optique (3), mais pour injecter de la lumière, sous un angle aigu par rapport à l'axe défini en section transversale par la surface de liaison entre le conducteur optique (3) et le film (4), au niveau du côté du conducteur optique (3) à l'opposé du film (4) projeté par l'arrière par dépose de la source de lumière (2) sur le conducteur optique (3), et lors de la projection par l'arrière du film (4) projeté par l'arrière, des éléments de fixation (6, 7) en forme de nervures du conducteur optique (3) sont formés en même temps pour la fixation de l'élément d'éclairage (1) à des éléments d'équipement intérieur du véhicule du conducteur optique (3).

2. Élément d'éclairage (1) selon la revendication 1, **caractérisé en ce que** la différence entre les indices de réfraction optique du film (4) projeté par l'arrière et du conducteur optique (3) est au moins égale à 0,09.

3. Élément d'éclairage (1) selon la revendication 2, **caractérisé en ce que** le conducteur optique (3) est constitué de polycarbonate et le film (4) projeté par l'arrière de poly(méthacrylate de méthyle).

4. Élément d'éclairage (1) selon la revendication 1, **caractérisé en ce que** le film (4) projeté par l'arrière est imprimé.

5. Élément d'éclairage (1) selon la revendication 4, **caractérisé en ce que** l'impression présente, à proximité de l'injection de lumière, une densité supérieure à celle à une distance plus grande de l'injection de lumière.

6. Élément d'éclairage (1) selon l'une des revendications précédentes, **caractérisé en ce que** plusieurs sources de lumière (2) sont disposées au niveau des bords extérieurs du conducteur optique (3) et injectent de la lumière dans le conducteur optique (3).

7. Élément d'éclairage (1) selon l'une des revendications précédentes, **caractérisé en ce que** le film (4) projeté par l'arrière est embouti en une forme tridimensionnelle et forme ainsi le côté de l'élément d'éclairage (1) qui fait face à un espace intérieur du véhicule.

8. Élément d'éclairage (1) selon l'une des revendications précédentes, **caractérisé en ce que** le conducteur optique (3) possède des nervures de raidissement et il est fixé au véhicule au niveau d'un côté de l'élément d'éclairage (1) qui fait face à un espace intérieur du véhicule.

9. Élément d'éclairage (1) selon l'une des revendications précédentes, **caractérisé en ce que** la source de lumière (2) et le conducteur optique (3) sont enclipsés l'un à l'autre.

10. Élément d'éclairage (1) selon la revendication 4, **caractérisé en ce que** le film (4) est imprimé plusieurs fois sur un côté.

11. Élément d'éclairage (1) selon l'une des revendications précédentes, **caractérisé en ce qu'**une injection de lumière dans le conducteur optique s'effectue au moyen de LED (12).

12. Procédé de fabrication d'un élément d'éclairage (1), comprenant les étapes suivantes :
impression (101) d'un film (4) plat ayant une épaisseur de 0,1 à 1,5 mm, de préférence de 0,2 à 0,3 mm,
formage (102) du film (4) en une forme tridimensionnelle prédéfinie,
découpe (103) du film (4) selon les dimensions d'une pièce d'équipement intérieur,
projection par l'arrière (104) du film (4) avec un matériau transparent en vue de former un conducteur optique (3), ayant une épaisseur de 1 à 5 mm, de préférence de 2,5 à 3 mm, et liaison à plat du film (4) et du conducteur optique (3),
* des éléments de fixation (6) en forme de nervures du conducteur optique (3) étant formés lors de la projection par l'arrière pour la fixation de l'élément d'éclairage (1) à des éléments d'équipement intérieur du véhicule, et
* le matériau du film (4) projeté par l'arrière présentant un indice de réfraction optique plus faible que celui du matériau du conducteur optique (3), fixation (105) d'au moins une source de lumière (2) au conducteur optique (3) de telle sorte que la source de lumière (2) ne rétroéclaire pas le conducteur optique (3), mais injecte de la lumière, sous un angle aigu par rapport à l'axe défini en section transversale par la surface de liaison entre le conducteur optique (3) et le film (4) projeté par l'arrière, au niveau du côté du conducteur optique (3) à l'opposé du film (4) projeté par l'arrière.

13. Procédé selon la revendication 12, **caractérisé en ce que** la fixation (105) de l'au moins une source de lumière (2) au conducteur optique (3) s'effectue à un angle de 0 à 45° par rapport à l'axe du conducteur optique (3) au moyen d'un clipsage de l'élément de fixation (6) en forme de nervures.

14. Procédé selon la revendication 12 ou 13, **caractérisé en ce que** la projection par l'arrière (104) du conducteur optique (3) s'effectue à des températures de 200 à 300 °C, de préférence de 250 à 300 °C, et sur un film (4) préchauffé à au moins 80 °C.

15. Procédé selon l'une des revendications 12 à 14, **caractérisé en ce que** le formage (102) du film (4) projeté par l'arrière s'effectue par emboutissage.

16. Procédé selon l'une des revendications 12 à 14, **caractérisé en ce que** lors de l'impression (101) du film (4) projeté par l'arrière, avant le formage (102), l'impression présente à proximité de l'injection de lumière une densité supérieure à celle à une distance plus grande de l'injection de lumière.
